# EUROPEAN PATENT APPLICATION

(11) **EP 4 035 959 A2**
(43) Date of publication of application: **03.08.2022**
(21) Application number: 22154490.1
(22) Date of filing: 01.02.2022
(51) Int. Cl.: B60T 13/66, B60T 17/22, B61H 13/30

(54) **RAILWAY VEHICLE BRAKE CONTROL DEVICE AND RAILWAY VEHICLE BRAKE DEVICE**

(30) Priority: 02.02.2021 JP 2021015170
(71) Applicant: Nabtesco Corporation, Tokyo 102-0093 (JP)
(72) Inventor: Kigami, Shogo, Tokyo, 102-0093 (JP); Kasamatsu, Masaki, Tokyo, 102-0093 (JP)
(74) Representative: Grünecker Patent- und Rechtsanwälte PartG mbB

(57) **Abstract**

A railway vehicle brake control device (100) includes: a receiving unit (101) configured to receive an emergency brake command for operating a brake device in case of emergency that puts a brake on a railway vehicle; a brake control unit (102) configured to use a predetermined braking force as a target braking force and control the brake device so as to generate the target braking force in response to the emergency brake command; and a sliding determination unit (103) configured to determine whether or not sliding is occurring on wheels of the railway vehicle during the control of the brake device, characterized in that after generating the predetermined braking force in response to the emergency brake command, the brake control unit (102) sets the target braking force to be equal to or larger than the predetermined braking force and increases the target braking force until sliding is determined to be occurring.

## Description

### BACKGROUND OF THE INVENTION

### 1. Field of the Invention

The present invention relates to a railway vehicle brake control device and a railway vehicle brake device.

### 2. Description of the Related Art

In the related art, a technology in which an emergency brake having a constant braking force is operated by an emergency brake command from a control platform or the like (see, for example, Patent Literature 1).

[Patent Literature 1] PCT International Publication No. WO 2011/064851

### SUMMARY OF THE INVENTION

The present inventors have obtained the following recognition regarding brake control devices used for railway vehicles. In case of emergency, an emergency brake is operated to bring a railway vehicle to an emergency stop. Since this emergency brake focuses on stopping a running railway vehicle, a relatively large braking force is set. On the other hand, as a brake device for a railway vehicle, there is often a surplus in a braking force that can be generated.

In order to suppress accidents and the like, the braking distance at the time of making an emergency stop in case of emergency is desirably made smaller. In order to reduce this braking distance, one possible option is to operate a brake with a larger braking force than the that of an emergency brake. However, there is a problem that if the braking force is simply increased too much, the railway vehicle will slide and the braking distance thus cannot be effectively reduced. Therefore, the present inventors have come to realization that effective operation of a brake with a larger braking force in case of emergency allows a brake control device to further reduce the braking distance of a railway vehicle.

In this background, a purpose of the present invention is to provide a technology capable of effectively reducing the braking distance when making an emergency stop in case of emergency.

A railway vehicle brake control device according to one embodiment of the present invention includes:
a receiving unit configured to receive an emergency brake command for operating a brake device in case of emergency that puts a brake on a railway vehicle;
a brake control unit configured to use a predetermined braking force as a target braking force and control the brake device so as to generate the target braking force in response to the emergency brake command; and
a sliding determination unit configured to determine whether or not sliding is occurring on wheels of the railway vehicle during the control of the brake device, characterized in that
after generating the predetermined braking force in response to the emergency brake command, the brake control unit sets the target braking force to be equal to or larger than the predetermined braking force and increases the target braking force until sliding is determined to be occurring.

A railway vehicle brake control device according to another embodiment of the present invention includes:
a railway vehicle brake control device including:
a sliding detection unit configured to detect sliding between wheels of a railway vehicle and a rail;
a receiving unit configured to receive an emergency brake command for operating a brake device in case of emergency that puts a brake on the railway vehicle;
a brake control unit configured to use a predetermined braking force as a target braking force and control the brake device so as to generate the target braking force in response to the emergency brake command; and
a sliding determination unit configured to determine whether or not sliding is occurring on wheels of the railway vehicle during the control of the brake device; and
the brake device, characterized in that
after generating the predetermined braking force in response to the emergency brake command, the brake control unit sets the target braking force to be equal to or larger than the predetermined braking force and increases the target braking force until sliding is determined to be occurring.

Optional combinations of the aforementioned elements, and implementations of the invention in the form of methods, apparatuses, programs, transitory or non-transitory storage media, systems, and the like may also be practiced as additional modes of the present invention.

According to the present invention, a braking distance when making an emergency stop in case of emergency can be effectively reduced.

### BRIEF DESCRIPTION OF THE DRAWINGS

Embodiments will now be described, by way of example only, with reference to the accompanying drawings that are meant to be exemplary, not limiting, and wherein like elements are numbered alike in several figures, in which:
FIG. 1 is a configuration diagram schematically showing the configuration of a railway vehicle equipped with a railway vehicle brake device;
FIG. 2 is a block diagram schematically showing a brake control device according to the first embodiment;
FIG. 3 is a flowchart of the operation of the brake control device according to the first embodiment;
FIG. 4 is a flowchart of the operation of sliding control of the brake control device;
FIG. 5 is a diagram explaining the operation of the sliding control of the brake control device;
FIG. 6 is a flowchart of the operation of braking force increase control of the brake control device;
FIG. 7 is a diagram explaining the operation of the braking force increase control of the brake control device;
FIG. 8 is a block diagram schematically showing a brake control device according to the second embodiment;
FIG. 9 is a block diagram schematically showing a brake control device according to the third embodiment;
FIG. 10 is a flowchart of the operation of the brake control device according to the third embodiment;
FIG. 11 is a block diagram schematically showing a brake control device according to the fourth embodiment; and
FIG. 12 is a flowchart of the operation of the brake control device according to the fourth embodiment.

### DETAILED DESCRIPTION OF THE INVENTION

Hereinafter, the invention will be described based on preferred embodiments with reference to the accompanying drawings. In the embodiments and variations, identical or like constituting elements and members are represented by identical symbols and a duplicate description will be omitted. The dimension of members in the drawings are enlarged or reduced as appropriate to facilitate understanding. Those of the members that are not important in describing the embodiment are omitted from the drawings.

### First Embodiment

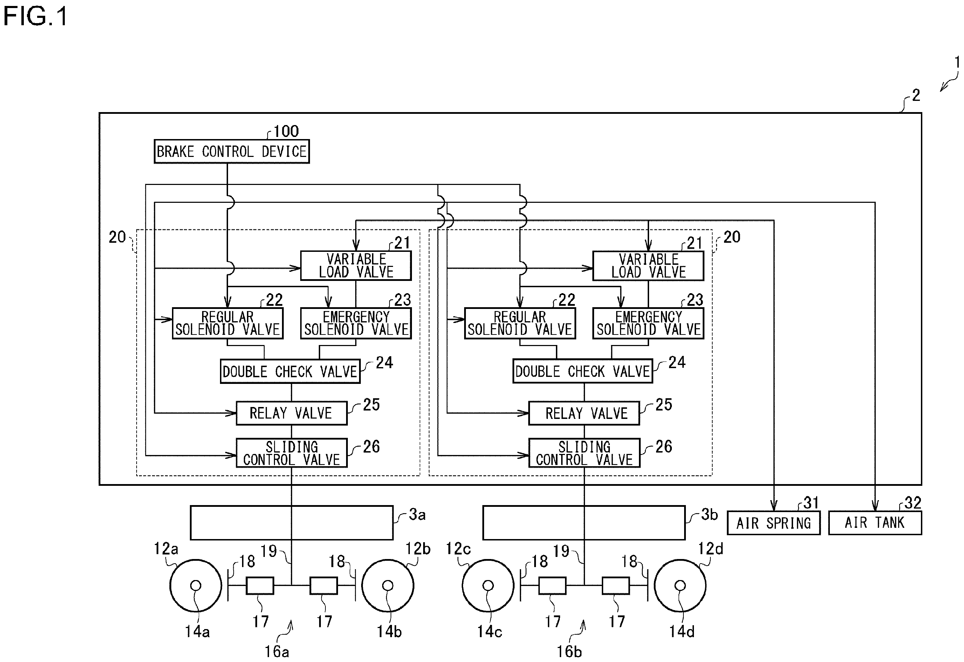

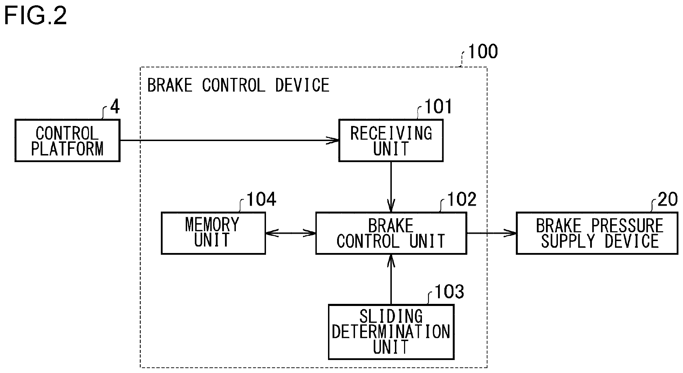

FIG. 1 is a configuration diagram schematically showing a railway vehicle 1 equipped with a railway vehicle brake device according to the first embodiment. FIG. 2 is a block diagram schematically showing the configuration of a railway vehicle brake control device of the railway vehicle brake device. The railway vehicle 1 includes a vehicle body 2, a pair of bogies 3a and 3b, and a railway vehicle brake device 10. The railway vehicle brake device 10 includes a railway vehicle brake control device 100 (hereinafter referred to as a brake control device) and a brake device 16.

The bogies 3a and 3b are provided on the front and rear of the vehicle body so as to support the vehicle body. The bogie 3a is provided with wheels 12a and 12b, axles 14a and 14b, and a brake device 16a. The bogie 3b is provided with wheels 12c and 12d, axles 14c and 14d, and a brake device 16b. The bogies 3a and 3b are collectively referred to as bogies 3. The wheels 12a to 12d are collectively referred to as wheels 12. The axles 14a to 14d are collectively referred to as axles 14. The brake devices 16a and 16b are collectively referred to as brake devices 16.

Axles 14 are respectively arranged on the front and rear of a bogie 3, and wheels 12 are attached to the respective ends of each axle. The axles 14 are rotated by a driving force transmitted from a motor (not shown) via a gear part (not shown).

The brake devices 16 puts a brake on the railway vehicle 1. The brake devices 16 apply a braking force for decelerating and stopping the railway vehicle 1 to the axles 14. The brake devices 16 according to the present embodiment are air brake devices including a brake cylinder 17, a wear material 18, and a brake pressure supply device 20. The brake pressure supply device 20 is connected to the brake cylinder 17 via a compressed air pipe 19 that serves as a supply path for supplying compressed air. An increase in the brake cylinder pressure caused by the compressed air supplied from the brake pressure supply device 20 via the compressed air pipe 19 causes the brake cylinder 17 to be operated. Due to the operation of the brake cylinder 17, the wear material 18 is pressed against the tread of the axles 14, and a braking force is generated on the axles 14.

An explanation will be given regarding the brake pressure supply device 20. The brake pressure supply device 20 includes a variable load valve 21, a regular solenoid valve 22, an emergency solenoid valve 23, a double check valve 24, a relay valve 25, and a sliding control valve 26.

The variable load valve 21 generates a load compensation pressure using the compressed air pressure supplied from an air tank 32 based on the pressure of an air spring 31 that supports the railway vehicle 1. This load compensation pressure is a pressure corresponding to the total weight of the railway vehicle 1 including the weight of the passengers.

The regular solenoid valve 22 generates a brake command pressure using the compressed air supplied from the air tank 32 and supplies the brake command pressure to the double check valve 24 so as to generate a target braking force specified in a later-described regular brake command based on a brake signal described later. Further, in the present embodiment, this brake command pressure is also used to generate a braking force increased in braking force increasing control described later.

In response to the supply stop of an excitation signal described later, the emergency solenoid valve 23 supplies the load compensation pressure of the variable load valve 21 to the double check valve 24 as an emergency brake pressure so as to generate a braking force for an emergency brake. The emergency solenoid valve 23 according to the present embodiment is a valve that switches an internal air passage by exciting and demagnetizing an electromagnetic coil. The emergency solenoid valve 23 is excited in response to an excitation signal described later in normal times and cuts off the supply of the load compensation pressure from the variable load valve 21. On the other hand, the emergency solenoid valve 23 is demagnetized due to the stopping of the supply of the excitation signal from the brake control device 100. As a result, the load compensation pressure of the variable load valve 21 is supplied to the double check valve 24 as an emergency brake pressure through the emergency solenoid valve 23.

The double check valve 24 is a valve that has two input ports and one output port. The double check valve 24 is configured so as to supply fluid with the higher pressure to the output port when fluid of a different pressure is provided to each of the above two input ports. One of the input ports of the double check valve 24 is connected to the regular solenoid valve 22, and the other one of the input ports is connected to the emergency solenoid valve 23. Therefore, the output port of the double check valve 24 outputs the larger of the brake command pressure from the regular solenoid valve 22 and the emergency brake pressure from the emergency solenoid valve 23.

The relay valve 25 amplifies the capacity of the brake command pressure or the emergency brake pressure supplied via the double check valve 24 using the compressed air from the air tank 32. This allows the capacity-amplified brake command pressure or emergency brake pressure to be output. The brake pressure output from the relay valve 25 is supplied to the brake cylinder 17 via the sliding control valve 26. The relay valve 25 may be provided for each axle of the wheel 12. The capacity-amplified emergency brake pressure in the present embodiment is an example of a brake pressure based on the load compensation pressure.

The sliding control valve 26 is used to reduce the brake pressure supplied to the brake cylinder 17 from the relay valve 25 so as to reduce the braking force when sliding is determined to be occurring. The sliding control valve 26 is controlled so as to perform a supply operation, a holding operation, and an exhaust operation. The supply operation is an operation for causing the brake device 16 to generate normal braking force. The holding operation is an operation for holding the internal pressure (brake pressure of the brake device 16) of the brake cylinder 17 so as to maintain the braking force. The exhaust operation is an operation for reducing the braking force by exhausting a portion of the compressed air supplied to the brake cylinder 17 to the outside. Therefore, by increasing the period of time during which the exhaust operation of the sliding control valve 26 is executed, the reduction range of the braking force can be increased.

The brake control device 100 will be explained with reference to FIG. 2. The functional blocks of the railway vehicle brake control device 100 shown in FIG. 2 are implemented in hardware such as electronic elements or mechanical parts such as a CPU of a computer, and in software such as a computer program. The figure depicts functional blocks implemented by the cooperation of the hardware and the software. Thus, a person skilled in the art should appreciate that there are many ways of accomplishing these functional blocks in various forms in accordance with the components of hardware, software, or the combination of both.

The brake control device 100 according to the present embodiment includes a receiving unit 101, a brake control unit 102, a sliding determination unit 103, and a memory unit 104.

The receiving unit 101 receives a regular brake command and an emergency brake command. The regular brake command is a command for operating the brake device 16 so as to generate a target braking force specified in accordance with a brake operation. The emergency brake command is a command for operating the brake device 16 in case of emergency. For example, the emergency brake command is supplied to the receiving unit 101 from a control platform 4 of the railway vehicle 1 in response to a brake operation by the motorman or the reception of an emergency stop signal from an external device of the railway vehicle 1.

In response to the regular brake command, the brake control unit 102 sets a target braking force and controls the brake device 16 so as to generate the target braking force. For example, the brake control unit 102 sets the braking force specified in the regular brake command as the target braking force and supplies to the regular solenoid valve 22 a brake signal for generating this target braking force that has been set. In a state where the emergency brake command has not been received, by supplying an excitation signal to the emergency solenoid valve 23, the brake control unit 102 excites the emergency solenoid valve 23 so as to shut off the supply of emergency brake pressure to the brake cylinder 17 at the emergency solenoid valve 23. In response to the emergency brake command, the brake control unit 102 sets a predetermined braking force as the target braking force and controls the brake device 16 so as to generate the target braking force. For example, by stopping the supply of the excitation signal to the emergency solenoid valve 23 in response to the emergency brake command, the brake control unit 102 demagnetizes the emergency solenoid valve 23 so as to supply the above capacity-amplified emergency brake pressure to the brake cylinder 17 via the emergency solenoid valve 23. Thereby, the predetermined braking force for the emergency brake is set as the target braking force.

The railway vehicle 1 according to the present embodiment employs an adhesive brake that uses the adhesive force between the wheels 12 and the rail. A decrease in the adhesion force due to a wet condition and the like in rainy weather greatly affects the braking distance. The braking distance will increase if the wheels slide due to a decrease in the adhesion force. Therefore, in order to suppress a large extension of the braking distance, the brake control unit 102 executes sliding control described below so as to reduce the braking force when sliding occurs.

In response to the emergency brake command, the brake control unit 102 according to the present embodiment executes braking force increase control in order to make the braking distance smaller. In this braking force increase control, after generating a predetermined braking force in response to the emergency brake command, the brake control unit 102 sets the target braking force to be equal to or larger than the predetermined braking force and increases the target braking force until sliding is determined to be occurring. In this braking force increase control, the brake control unit 102 supplies to the regular solenoid valve 22 a brake signal for generating the increased target braking force. The details of this braking force increase control will be described later.

The sliding determination unit 103 determines whether or not sliding is occurring on the wheels 12 during the control of the brake device 16. The sliding determination unit 103 employs various known methods so as to detect sliding of the wheels 12. The sliding determination unit 103 according to the present embodiment determines whether or not sliding is occurring based on a comparison between the rotational speed of the axles 14 and the translational speed of the railway vehicle 1 (hereinafter referred to as "vehicle speed Vs"). The vehicle speed Vs is acquired from a GPS or a vehicle speed sensor (not shown) installed in the railway vehicle 1. The rotational speed of the axles 14 can be identified from the number of pulses per unit time of a rotation sensor (not shown) such as an encoder that outputs a pulse signal according to the rotational position of the axles 14. By multiplying the rotational speed of the axles 14 by a predetermined factor, a speed that can be compared with the vehicle speed (hereinafter referred to as "axle speed Va") can be calculated.

In an adhesive state where there is no macroscopic slip between the wheels 12 and the rail, the vehicle speed Vs is equal to the axle speed Va. When a slip occurs between the wheels 12 and the rail, the speed difference dV between the vehicle speed Vs and the axle speed Va increases. In a sliding state where sliding has occurred, the speed difference dV between the vehicle speed Vs and the axle speed Va increases. The sliding determination unit 103 determines that sliding is not occurring when the speed difference dV is equal to or less than a threshold, determines that sliding is occurring when the speed difference dV exceeds the threshold, and provides the determination result to the brake control unit 102.

The memory unit 104 stores various data. For example, the memory unit 104 stores the brake pressure (hereinafter referred to as AC pressure) in the brake device 16 that is immediately before sliding occurs.

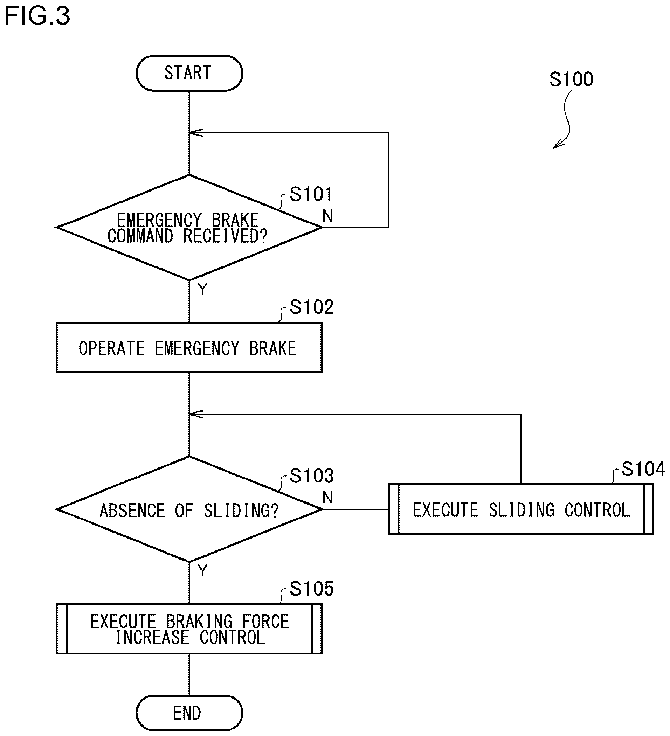

The following is an explanation of an operation S100 of the brake control device 100 with reference to FIG. 3. FIG. 3 is a flowchart of the operation S100.

In S101, the brake control unit 102 determines whether or not an emergency brake command has been received via the receiving unit 101. When the emergency brake command has not been received (N in S101), the operation S100 goes back to S101. When an emergency brake command has been received (Y in S101), the operation S100 proceeds to S102.

In S102, the brake control unit 102 operates the emergency brake.

In S103, the sliding determination unit 103 determines whether sliding has not occurred at the wheels 12 for a predetermined period of time based on the speed difference dV. When sliding is occurring (N in S103), the sliding determination unit 103 supplies a sliding detection signal to the brake control unit 102, and the operation S100 proceeds to S104. When sliding has not occurred for the predetermined period of time (Y in S103), the sliding determination unit 103 supplies a sliding non-detection signal to the brake control unit 102, and the operation S100 proceeds to S105.

In S104, the brake control unit 102 executes sliding control described later in response to the sliding detection signal. Thereafter, the operation S100 goes back to S103.

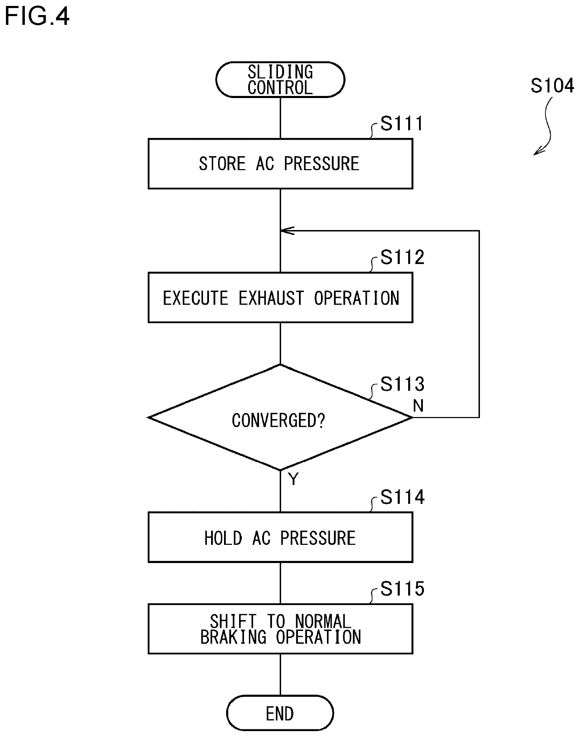

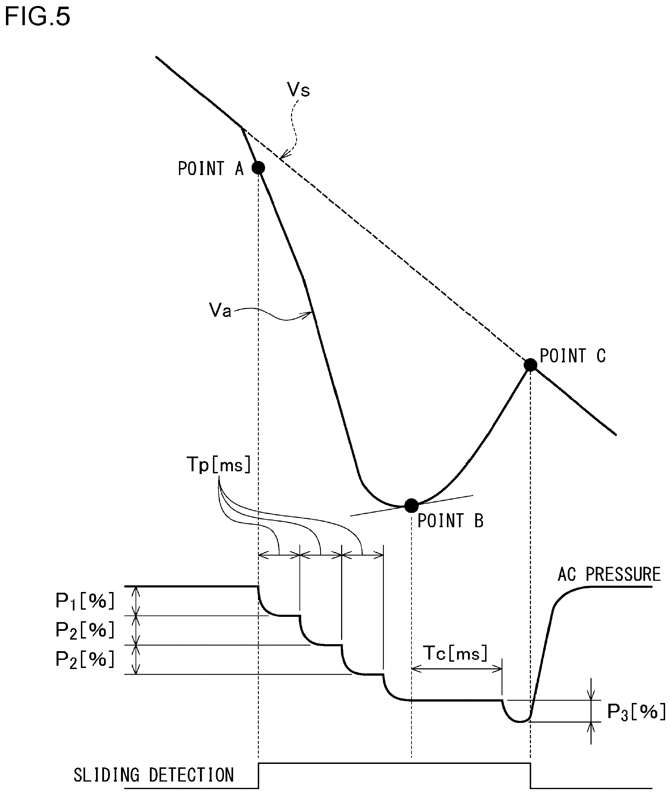

The sliding control will be explained using FIGS. 4 and 5. FIG. 4 is a flowchart of the operation S104 of the sliding control. FIG. 5 is a diagram explaining the operation S104 of the sliding control. FIG. 5 shows the vehicle speed Vs, the axle speed Va, and AC pressure along with the elapsed time on the horizontal axis.

The operation S104 is started in a state where the AC pressure is high in response to the emergency brake command. As shown in FIG. 5, in this state, the braking force of the brake device 16 causes the vehicle speed Vs and the axial speed Va to gradually decrease. In an initial adhesive state, the speed difference dV between the vehicle speed Vs and the axle speed Va is almost zero. However, when a slip occurs, the speed difference dV gradually increases.

If sliding is determined to be occurring, the brake control unit 102 stores the AC pressure at the time of the sliding detection in the memory unit 104 in Sill. In the present embodiment, the AC pressure at point A in FIG. 5 where it is determined that sliding is occurring is stored.

In S112, the brake control unit 102 causes the sliding control valve 26 to execute the exhaust operation. In this exhaust operation immediately after the sliding detection, P₁ [%] of the AC pressure stored in Sill is exhausted. As a result, the AC pressure is reduced by P₁ [%] as shown in FIG. 5.

In S113, the sliding determination unit 103 determines whether or not the state is a convergence state based on the speed difference dV. The convergence state is a state in which the speed difference dV does not change or decreases (for example, point B in FIG. 5). In the case of a non-convergence state (N in S113), the operation S104 goes back to step S112. Thereafter, until the state is determined to be the convergence state, P₂ [%] of the AC pressure stored in Sill is exhausted in S112. In the case of the convergence state (Y in step S113), the operation S104 shifts to S114. Therefore, the exhaust operation in S112 is repeated every predetermined exhaust time Tp until the state is determined to be the convergence state.

In S114, the brake control unit 102 holds the AC pressure obtained when convergence is detected. When the state becomes the convergence state, the speed difference dV gradually decreases, and the speed difference dV eventually becomes zero, and re-adhesion (point C in FIG. 5) is detected. When the holding state continues for a long time until the re-adhesion is detected, P₃ [%] of the stored AC pressure is exhausted every Tc [ms]. When re-sliding is detected while this holding operation is maintained, the operation S104 may go back to Sill. In this case, the AC pressure at the time the re-sliding is detected need to be stored in the memory unit 104.

When re-adhesion is detected, the brake control unit 102 causes the sliding control valve 26 to execute the supply operation, terminates the sliding control, and shifts to a normal braking operation in S115. After shifting to the normal braking operation, the operation S104 ends.

Returning to FIG. 3, the brake control unit 102 executes braking force increase control described later in response to a supplied sliding non-detection signal in S105. After S105, the operation S100 ends.

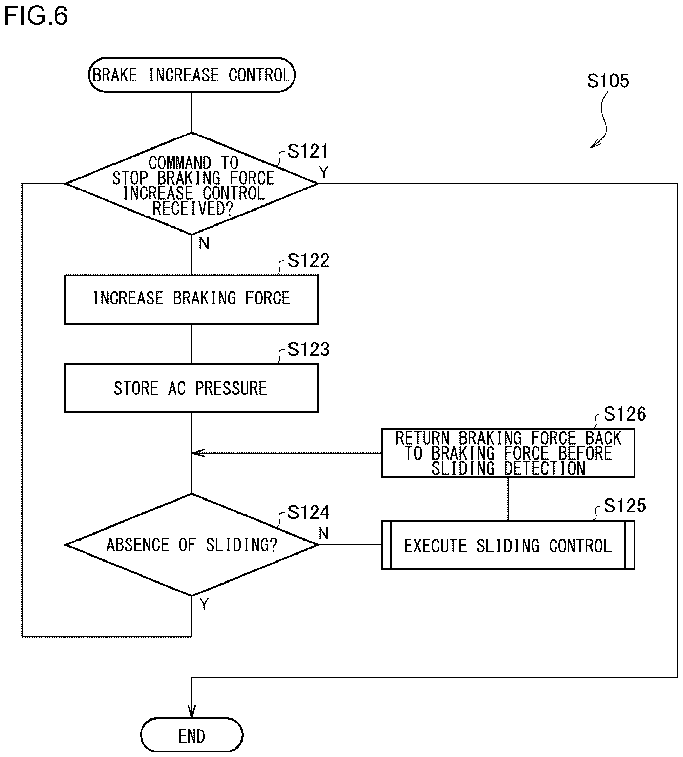

The braking force increase control in S105 will be explained using FIG. 6. First, in S121, the brake control unit 102 determines whether or not a command to stop the braking force increase control has been received via the receiving unit 101. For example, the command to stop the braking force increase control is supplied from the control platform 4 to the receiving unit 101 when the railway vehicle 1 stops, when the motorman enters operation input for stopping the braking force increase control, or the like. When the command to stop the braking force increase control is received (Y in S121), the operation S105 ends. When the command to stop the braking force increase control has not been received (N in S121), the operation S105 proceeds to S122.

In S122, the brake control unit 102 sets the target braking force so as to increase the braking force by a predetermined amount and controls the brake device 16 so as to generate the set braking force. More specifically, the brake control unit 102 supplies a brake signal to the regular solenoid valve 22 so as to generate a brake command pressure corresponding to the increased target braking force. In response to this brake signal, the regular solenoid valve 22 generates the brake command pressure corresponding to the increased target braking force and supplies this brake command pressure to the double check valve 24.

On the other hand, in parallel with the supply of the brake command pressure from the regular solenoid valve 22, an emergency brake pressure is supplied from the emergency solenoid valve 23 to the double check valve 24 in response to an emergency brake command. As described above, the double check valve 24 supplies the larger of the brake command pressure and the emergency brake pressure to the relay valve 25. Therefore, in case of emergency, the generated braking force is never less than the braking force of the emergency brake, i.e., it is possible to apply a braking force equal to or larger than that of the emergency brake.

When the speed difference dV is smaller than a predetermined speed difference reference value, the brake control unit 102 according to the present embodiment increases the amount of increase in the target braking force per unit time in S122 to be more than that of a case where the speed difference dV is equal to or larger than the predetermined speed difference reference value. For example, when the speed difference dV exceeds a plurality of speed difference reference values set in stages, the brake control unit 102 may set the amount of increase that corresponds to the exceeded speed difference reference value. Also, the brake control unit 102 may increase the amount of increase per unit time in the target braking force in a stepwise or continuous manner as the speed difference dV increases.

In S123, the brake control unit 102 stores the AC pressure obtained after increasing the braking force in the memory unit 104.

In S124, the sliding determination unit 103 determines whether sliding has not occurred at the wheels 12 for a predetermined period of time based on the speed difference dV. When sliding is occurring (N in S124), the sliding determination unit 113 supplies a sliding generation signal to the brake control unit 102, and the operation S105 proceeds to S125. When sliding has not occurred (Y in S124), S105 goes back to S121.

In S125, the brake control unit 102 executes sliding control. The sliding control in S125 is the same as the sliding control in S104. Therefore, the explanation thereof is omitted. In the sliding control in S125, the operation of storing the AC pressure in Sill may be omitted, and the AC pressure stored in S123 may be used. After S125, S105 shifts to S126.

In S126, the brake control unit 102 returns the target braking force back to the target braking force obtained before the occurrence of the sliding. More specifically, the brake control unit 102 controls the brake device 16 so as to generate a braking force that corresponds to the AC pressure stored in S123. Thereby, in the braking force increase control, a braking force that is larger than the braking force of the emergency brake is maintained even after the sliding is ended. In S126, the target braking force may be set to be larger than the braking force obtained before the occurrence of the sliding. After S126, S105 goes back to S124.

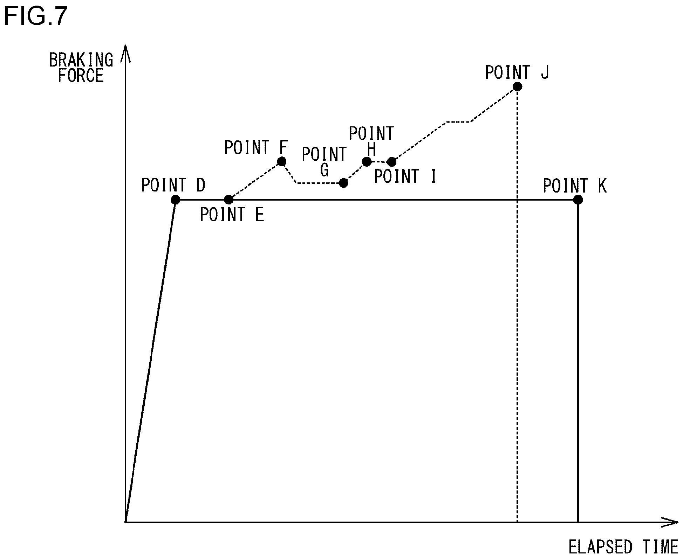

The braking force in the braking force increase control in S105 will be explained with reference to FIG. 7. FIG. 7 shows an example of the change in the braking force in the braking force increase control. First, for comparison, the braking force in the emergency brake will be explained. The braking force in the emergency brake is shown by a solid line in FIG. 7. After the braking force increases steeply to point D due to the operation of the emergency brake, a constant braking force is maintained. When the railway vehicle 1 stops at point K, the operation of the emergency brake is ended. As described, in the case of the emergency brake, it takes time for the railway vehicle 1 to reach the point K to stop.

Next, the braking force in the braking force increase control will be explained. The braking force in the braking force increase control is indicated by a dashed line in FIG. 7. Upon receiving an emergency brake command, the emergency brake becomes operated (S102 in FIG. 3). In this case, the braking force is increased in such a manner that the braking force rises steeply to point D. After that, when sliding has not occurred for a predetermined time from the point D to point E (Y in S103 in FIG. 3), the braking force increase control is executed, and the braking force is increased (S122 in FIG. 6). Then, when sliding is detected at point F (N in S124 in FIG. 6), sliding control is executed (S125 in FIG. 6). After that, when re-adhesion is detected at point G, the braking force is increased up to point H such that the braking force becomes the same as the braking force before the occurrence of the sliding (S125 in FIG. 6). Then, when no sliding is detected for a predetermined period of time up to point I (Y in S124 in FIG. 6), the braking force is increased (S122 in FIG. 6). After that, a control loop from S121 to S124 in FIG. 6 is repeated, and when a command to stop the braking force increase control is received at point J (Y in S121 in FIG. 6), the braking force increase control is ended, and the operation of the brake device 16 is ended. As shown in the braking force from the point H to the point J, it is understood that when the sliding is ended, the brake control unit 102 increases the target braking force to be equal to or larger than the braking force obtained before the occurrence of the sliding. In this way, the braking force increase control allows a braking force larger than that of the emergency brake to be provided to the railway vehicle 1. Therefore, as shown at the point J in FIG. 7, the time required for the railway vehicle 1 to stop can be reduced compared to the case where the emergency brake is operated (point K in FIG. 7).

The action and effect of the present embodiment will be explained in the following.

In case of emergency, an emergency brake command is issued from the control platform 4 to bring the railway vehicle 1 to an emergency stop, and the emergency brake is operated in response to the emergency brake command. Considering not only the viewpoint of bringing the running railway vehicle 1 to emergency stop but also the viewpoint of safety such as mitigation of the impact of sudden braking given to passengers, the emergency brake applies to the railway vehicle 1 a constant braking force according to a load compensation pressure that is based on the total weight of the railway vehicle 1 including the weight of the passengers. On the other hand, in the brake device 16, a higher braking force can be generated by using compressed air supplied from the air tank 32.

In order to prevent accidents such as collisions with obstacles in front of the railway vehicle 1, the braking distance in case of emergency is desirably made smaller. In order to reduce this braking distance, one possible option is to operate a brake with a larger braking force than the that of an emergency brake. However, there is a problem that if the braking force is simply increased too much, the railway vehicle 1 will slide and the braking distance cannot be effectively reduced.

Therefore, after generating a predetermined braking force in response to an emergency brake command, the brake control unit 102 according to the present embodiment sets the target braking force to be equal to or larger than the predetermined braking force and increases the target braking force until sliding is determined to be occurring. According to the present embodiment, it is possible to apply a braking force to the railway vehicle 1 that is equal to or larger than a predetermined braking force generated in response to an emergency brake command while suppressing sliding. As a result, a braking distance when making an emergency stop in case of emergency can be effectively reduced.

In the present embodiment, when the sliding is ended, the brake control unit 102 increases the target braking force to be equal to or larger than the braking force obtained before the occurrence of the sliding. It is known that since the vehicle speed is smaller than that obtained before the occurrence of the sliding after the sliding is ended, the adhesion limit between the wheels 12 and the rail becomes larger than that obtained before the occurrence of the sliding. According to the present configuration, the target braking force can be increased by taking into account the fact that the adhesion limit between the wheels 12 and the rail is larger after the sliding is ended. Therefore, the braking distance can be made smaller.

In the present embodiment, when the speed difference dV is smaller than a predetermined speed difference reference value, the brake control unit 102 increases the amount of increase in the target braking force per unit time to be more than that of a case where the speed difference dV is equal to or larger than the predetermined speed difference reference value. According to the present configuration, the amount of increase in the target braking force per unit time can be adjusted in consideration of the speed difference dV, thereby allowing the sliding to be effectively ended. As a result, the braking distance can be made smaller.

### Exemplary Variation

An explanation will be given in the following regarding exemplary variations.

In the present embodiment, an example is shown where whether or not sliding is occurring is determined according to the speed difference dV. However, However, this is non-limiting. For example, the sliding determination unit 103 may determine whether sliding is occurring or not according to the ratio of the speed difference dV to the vehicle speed Vs (also referred to as "slip ratio").

In the present embodiment, an example is shown in which the brake device 16 and the sliding control valve 26 are provided for each bogie 3. However, this is non-limiting. For example, the brake device 16 and the sliding control valve 26 may be provided for each axle 14. Further, the sliding control valve 26 may be controlled separately or may control the two axles of the bogie 3 in an integral manner.

In the present embodiment, a brake control device 100 is provided for each railway vehicle 1. However, this is non-limiting. For example, the brake control device 100 may be provided for each axle 14 or bogie 3. Also, for example, in a train composed of a plurality of railway vehicles 1, only one brake control device 100 may be installed in the train so as to control the plurality of railway vehicles 1 collectively.

In the present embodiment, the amount of increase in the target braking force per unit time is adjusted based on the speed difference dV. However, this is non-limiting. For example, the amount of increase of the target brake may be constant.

Wheels 12 located relatively on the rear side in the direction of travel of the railway vehicle 1 are less prone to sliding than wheels 12 located relatively on the front side in the direction of travel. Thus, the brake control unit 102 may set the amount of increase in the target braking force per unit time for the wheels 12 located relatively on the rear side in the direction of travel of the railway vehicle 1 to be larger than the amount of increase in the target braking force per unit time for the wheels 12 located relatively on the front side in the direction of travel. In this case, the expression of being located relatively on the front side or the rear side in the direction of travel includes not only the front-rear relationship in one railway vehicle 1 but also the front-rear relationships among a plurality of railway vehicles 1. According to the present configuration, the braking distance of the entire railway vehicle can be effectively made small while suppressing the occurrence of sliding.

In the present embodiment, the regular solenoid valve 22 is used to generate an AC pressure in the brake increase control. However, this is non-limiting. For example, the emergency solenoid valve 23 may be controlled so as to generate the AC pressure in the brake increase control, or an additional solenoid valve for generating an AC pressure in the brake increase control may be provided in addition to the regular solenoid valve 22 and the emergency solenoid valve 23.

In the present embodiment, an example is shown in which the operation S104 includes the step S113 for convergence determination. However, this is non-limiting. For example, the sliding control valve 26 may be controlled according to accumulated exhaust time Tp or the number of times the exhaust operation is operated. In this case, the sliding control may be ended without performing convergence determination, and the operation may shift to the normal braking operation.

In the present embodiment, the speed difference dV used for comparison with a predetermined speed difference reference value is the speed difference between the vehicle speed Vs and the axle speed Va. However, this is non-limiting. For example, the axle speed of an axle 14 with the smallest rotational speed may be set as a reference axle speed, and the speed difference between the axle speed Va of each axle 14 and the reference axle speed may be set as the speed difference dV. Therefore, the speed difference dV may be the speed difference between the axle speed Va of each axle 14 and a predetermined reference speed.

### Second Embodiment

Next, the second exemplary embodiment of the present invention will be explained. In the figures and explanations of the second exemplary embodiment, the same or equivalent constituting elements and members as those in the first embodiment shall be denoted by the same reference numerals. Explanations that are the same as those in the first embodiment are appropriately omitted, and an explanation will be given focusing on features that are different from those of the first embodiment.

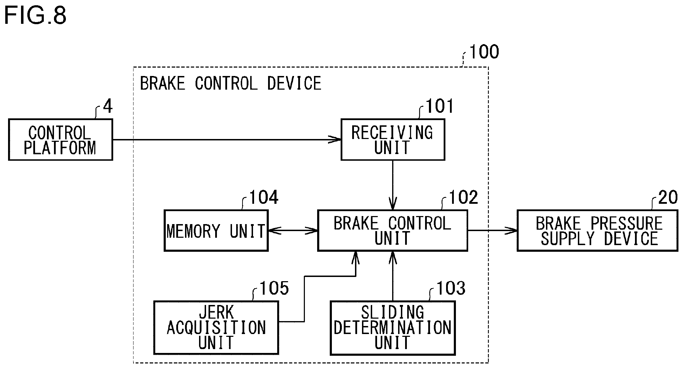

FIG. 8 is now referred to. A brake control device 100 according to the present embodiment includes a jerk acquisition unit 105 that acquires jerk in the direction of travel of a railway vehicle 1. The jerk acquisition unit 105 according to the present embodiment acquires the jerk from an output value of a jerk sensor (not shown) provided in the railway vehicle 1. The jerk may be acquired by differentiating the output value of acceleration from an acceleration sensor by time without using the jerk sensor.

The brake control unit 102 according to the present embodiment stops the increase of the target braking force when the jerk acquired by the jerk acquisition unit 105 is larger than a threshold value. The threshold value is appropriately determined according to the design and the like.

In the braking force increase control described above, a brake with a higher braking force than that of the emergency brake is applied. Therefore, there is a risk that the sudden braking may cause a greater impact to the passengers in the vehicle compared to the case of emergency braking. According to the present embodiment, it is possible to stop the increase of the target braking force when a large impact to the extent that the jerk exceeds the threshold is applied. As a result, degradation in passenger's ride comfort can be suppressed. This is especially effective in order to suppress the deterioration in the case of singlevehicle trains since the ride comfort is likely to deteriorate relatively due to the braking force increase control.

### Third Embodiment

Next, the third exemplary embodiment of the present invention will be explained. In the figures and explanations of the third exemplary embodiment, the same or equivalent constituting elements and members as those in the first embodiment shall be denoted by the same reference numerals. Explanations that are the same as those in the first embodiment are appropriately omitted, and an explanation will be given focusing on features that are different from those of the first embodiment.

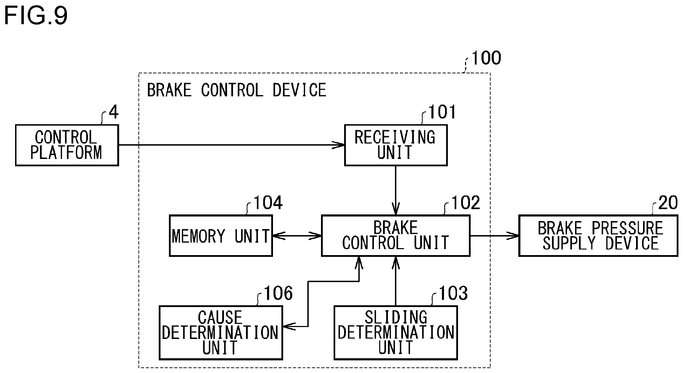

FIG. 9 is now referred to. A brake control device 100 according to the present embodiment further includes a cause determination unit 106 that determines whether or not the cause for the issuance of an emergency brake command is an external cause of the railway vehicle 1.

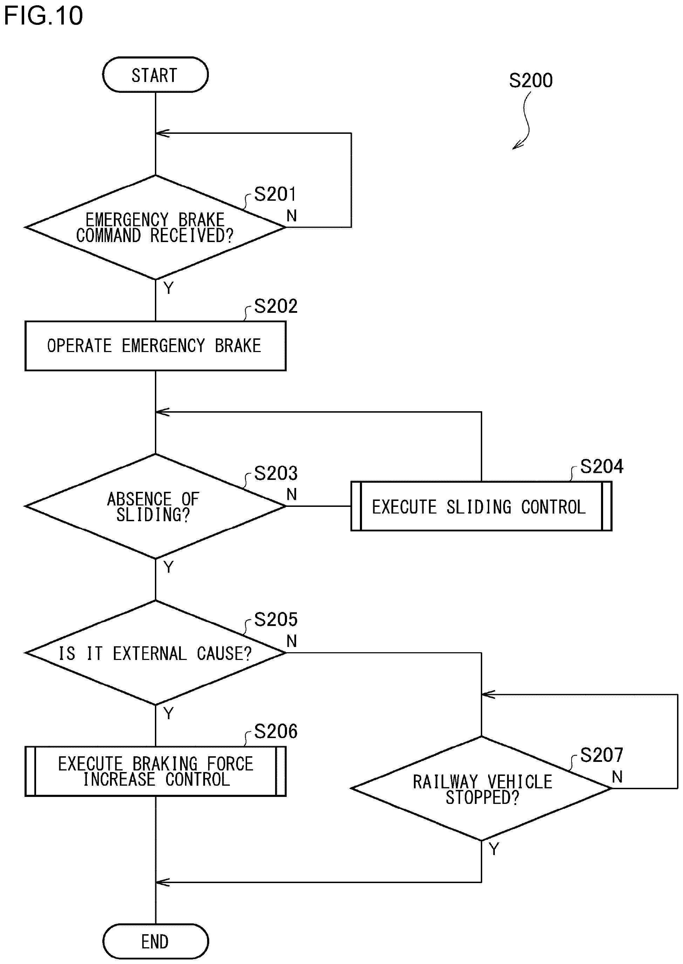

An explanation of an operation S200 of the brake control device 100 according to the present embodiment will be given with reference to FIG. 10. FIG. 10 is a flowchart of the operation S200. In the operation S200, processes from S201 to S204 and in S206 are basically the same as those in S101 to S105 described above except when specifically mentioned, and the explanations thereof are therefore omitted.

When it is determined in S203 that no sliding has occurred (Y in S203), the sliding determination unit 103 supplies a sliding non-detection signal to the cause determination unit 106, and the operation S200 proceeds to S205.

In S205, the cause determination unit 106 determines whether or not the cause for the issuance of the emergency brake command is an external cause of the railway vehicle 1. The "external cause" in this case means, for example, the appearance of an obstacle (person, object, landslide, etc.) in front of the vehicle, the occurrence of an earthquake or strong wind, or the like. For example, when an emergency brake command is issued from the control platform 4 in response to an emergency stop signal from an external device without a motorman's brake operation, the cause for the emergency brake command is determined to be an external cause of the railway vehicle 1 based on this emergency stop signal. Further, for example, when the motorman identifies a railway signal and an emergency brake command is issued from the control platform 4 through the motorman's brake operation, the brake control device 100 self-diagnoses the railway vehicle 1. In this case, for example, when the brake control device 100 self-diagnoses that the cause for the emergency brake command is not an internal cause such as a loss of power supply or a pressure drop in the main reservoir pipe, it is determined that the cause for the emergency brake command is an external cause of the railway vehicle 1.

When the cause is determined to be an external cause, the cause determination unit 106 supplies an external cause signal to the brake control unit 102, and the operation S200 proceeds to S206. In S206, the brake control unit 102 executes the above-mentioned braking force increase control in response to the external cause signal. When the cause is determined not to be an external cause, the cause determination unit 106 supplies an internal cause signal to the brake control unit 102, and the operation S200 proceeds to S207.

In S207, the brake control unit 102 responds to the internal cause signal so as to determine whether or not the railway vehicle 1 has come to a stop. When the railway vehicle 1 has come to a stop, the operation S200 ends. When the railway vehicle 1 has not come to a stop, the operation S200 goes back to S207. In S207, since the emergency brake operated in S202 is being operated, the emergency brake will continue to be operated without increasing the target braking force until the railway vehicle 1 stops.

When the cause for the emergency brake command is an external cause of the railway vehicle 1, it is required to stop the railway vehicle 1 more quickly since the risk of collision with obstacles or overturning of the railway vehicle 1 becomes high. On the other hand, when the cause is an internal cause of the railway vehicle 1, since the risk of collision or overturning is not so high, the need for an emergency stop is lower than that in the case of an external cause. Therefore, if the above-mentioned braking force increase control is executed even for such an internal cause, it may unnecessarily worsen the ride comfort of the passengers since a braking force larger than the emergency brake is applied. In the present embodiment, the brake control unit 102 does not execute the above-mentioned braking force increase control and does not increase the target braking force when it is determined that the above cause is not an external cause and executes the braking force increase control so as to increase the target braking force when it is determined that the above cause is an external cause. According to the present configuration, since the above-mentioned braking force increase control can be executed as necessary, it is possible to effectively make the braking distance small while suppressing the deterioration of passenger's ride comfort.

When there is an obstacle in front of the railway vehicle 1 in the direction of travel and the risk of collision with the obstacle is high since the distance to the obstacle is small, it is necessary to apply a larger braking force to the railway vehicle 1 so as to reduce the braking distance. On the other hand, when the distance to the obstacle is large and the risk of collision with the obstacle is low, the vehicle is required to come to a stop in consideration of the comfort and safety of the passengers rather than avoiding a collision.

Therefore, in the present embodiment, when the cause determination unit 106 determines that there is an obstacle in front of the railway vehicle 1 in the direction of travel as an external cause, when the distance between the railway vehicle 1 and the obstacle is smaller than a predetermined distance reference value, the brake control unit 102 may increase the amount of increase in the target braking force per unit time to be more than that of a case where the above distance is equal to or larger than the predetermined distance reference value. For example, when the distance from the obstacle falls below a plurality of distance reference values set in stages, the brake control unit 102 sets the amount of increase that corresponds to a threshold value below which the distance falls. Also, the brake control unit 102 may increase the amount of increase per unit time in the target braking force in a stepwise or continuous manner as the distance to the obstacle decreases.

According to the present configuration, the amount of increase in the target braking force can be adjusted in consideration of the distance to an obstacle in front of the vehicle. Therefore, when the distance to the obstacle is small, the braking distance can be made smaller, and when the distance to the obstacle is large, the impact of the brake on the passengers can be mitigated while suppressing a collision with the obstacle.

### Fourth Embodiment

Next, the fourth exemplary embodiment of the present invention will be explained. In the figures and explanations of the fourth exemplary embodiment, the same or equivalent constituting elements and members as those in the third embodiment shall be denoted by the same reference numerals. Explanations that are the same as those in the third embodiment are appropriately omitted, and an explanation will be given focusing on features that are different from those of the third embodiment.

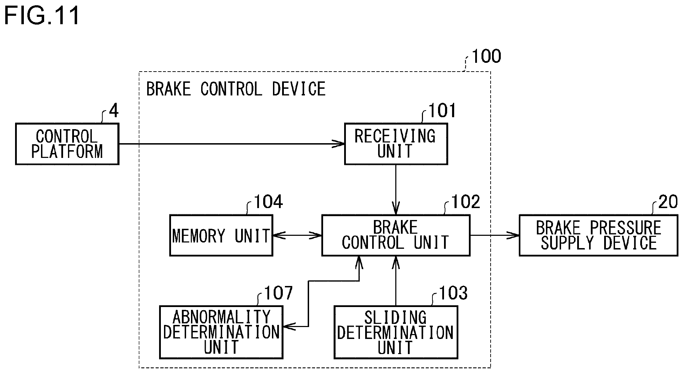

FIG. 11 is now referred to. A brake control device 100 according to the present embodiment further includes an abnormality determination unit 107 that determines whether or not the brake control device 100 is in an abnormal state.

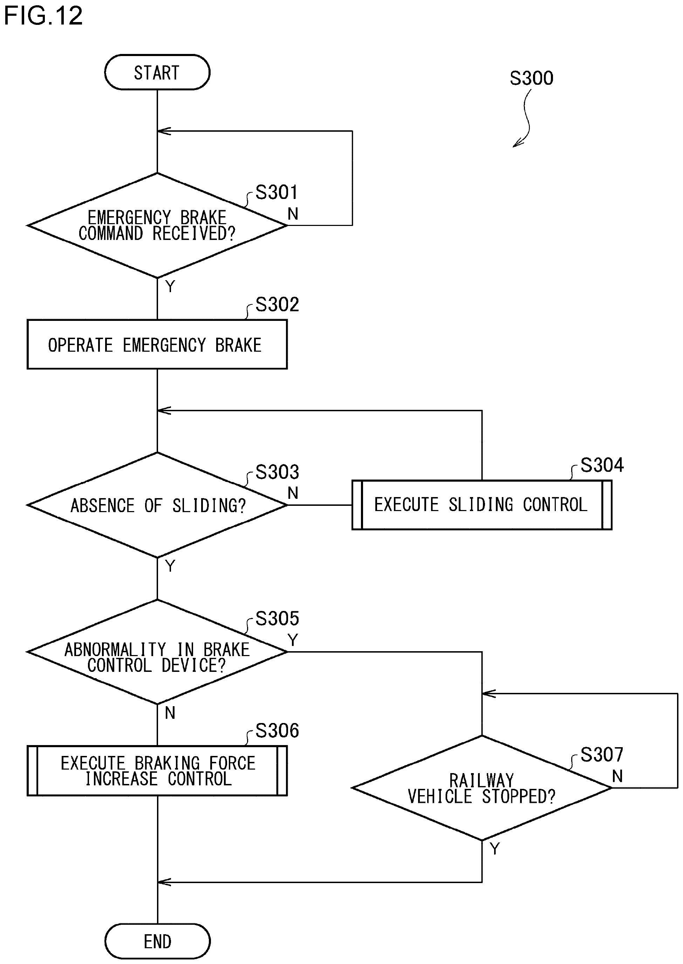

An explanation of an operation S300 of the brake control device 100 according to the present embodiment will be given with reference to FIG. 12. FIG. 12 is a flowchart of the operation S300. In the operation S300, processes from S301 to S304 and in S306 and S307 are basically the same as those in S201 to S204 and in S206 and S207 described above except when specifically mentioned, and the explanations thereof are therefore omitted.

When it is determined in S303 that no sliding has occurred (Y in S303), the sliding determination unit 103 supplies a sliding non-detection signal to the abnormality determination unit 107, and the operation S300 proceeds to S305.

In S305, the abnormality determination unit 107 determines whether or not the brake control device 100 is in an abnormal state. The expression "the brake control device 100 is in an abnormal state" in this case means, for example, a state in which the brake control device 100 has failed or a state in which the software stored in the memory, etc., of the brake control device 100 is defective. These "abnormal states" can be determined by using known methods as appropriate.

When the brake control device 100 is determined to be in an abnormal state, the abnormality determination unit 107 supplies an abnormal state signal to the brake control unit 102, and the operation S300 proceeds to S306. When the brake control device 100 is determined not to be in an abnormal state, the abnormality determination unit 107 supplies a normal state signal to the brake control unit 102, and the operation S300 proceeds to S307. In S307, the brake control unit 102 responds to the normal state signal so as to determine whether or not the railway vehicle 1 has come to a stop.

When the brake control device 100 is in an abnormal state, the above brake force increase control may not be properly executed. As a result, for example, the braking distance cannot be effectively reduced, and the safety of passengers, etc., may be hindered. According to the present embodiment, the brake control unit 102 does not execute the above brake force increase control when the brake control device 100 is determined to be in an abnormal state. Therefore, the brake control unit 102 continues to apply the emergency brake without supplying an excitation signal to the emergency solenoid valve when the brake control device 100 is in an abnormal state. According to the present configuration, it is possible to bring a railway vehicle to an emergency stop while more appropriately ensuring safety for passengers.

Optional combinations of the aforementioned embodiments and exemplary variations will also be within the scope of the present invention. New modes of practicing the invention created by combinations will provide the advantages of the embodiments and exemplary variations combined.

The present invention relates to a railway vehicle brake control device and a railway vehicle brake device.
- 1: railway vehicle,
- 4: control platform,
- 10: railway vehicle brake control device,
- 16: brake device,
- 20: brake pressure supply device,
- 100: railway vehicle brake control device,
- 101: receiving unit,
- 102: brake control unit,
- 103: sliding determination unit,
- 104: memory unit,
- 105: jerk acquisition unit,
- 106: cause determination unit,
- 107: abnormality determination unit

## Claims

1. A railway vehicle brake control device (100) **characterized by** comprising:
a receiving unit (101) configured to receive an emergency brake command for operating a brake device (16) in case of emergency that puts a brake on a railway vehicle (1);
a brake control unit (102) configured to use as a target braking force and control the brake device (16) so as to generate the target braking force in response to the emergency brake command; and
a sliding determination unit (103) configured to determine whether or not sliding is occurring on wheels (12) of the railway vehicle (1) during the control of the brake device (16), **characterized in that**
after generating the predetermined braking force in response to the emergency brake command, the brake control unit (102) sets the target braking force to be equal to or larger than the predetermined braking force and increases the target braking force until sliding is determined to be occurring.

2. The railway vehicle brake control device (100) according to claim 1, **characterized in that**
when the sliding is ended, the brake control unit (102) increases the target braking force to be equal to or larger than a braking force obtained before the occurrence of the sliding.

3. The railway vehicle brake control device (100) according to claim 1 or 2, **characterized in that**
when the speed difference between the rotational speed of an axle (14) of the railway vehicle (1) and a predetermined reference speed is smaller than a predetermined speed difference reference value, the brake control unit (102) increases the amount of increase in the target braking force per unit time to be more than that of a case where the speed difference is equal to or larger than the speed difference reference value.

4. The railway vehicle brake control device (100) according to any one of claims 1 through 3, **characterized by** comprising:
a jerk acquisition unit (104) configured to acquire jerk in the direction of travel of the railway vehicle (1), **characterized in that**
the brake control unit (102) stops the increase of the target braking force when the jerk is larger than a threshold value.

5. The railway vehicle brake control device (100) according to any one of claims 1 through 4, **characterized in that**
the brake control unit (102) sets the amount of increase in the target braking force per unit time for wheels (12) located relatively on the rear side in the direction of travel of the railway vehicle (1) to be larger than the amount of increase in the target braking force per unit time for wheels (12) located relatively on the front side in the direction of travel.

6. The railway vehicle brake control device (100) according to any one of claims 1 through 5, **characterized in that**
the receiving unit (101) receives a regular brake command for operating the brake device (16) so as to generate a target braking force specified in accordance with a brake operation, and
in response to the regular brake command, the brake control unit (102) operates the brake device (16) so as to generate the specified target braking force.

7. The railway vehicle brake control device (100) according to any one of claims 1 through 6, **characterized by** comprising:
a cause determination unit (106) configured to determine whether or not the cause for the issuance of the emergency brake command is an external cause of the railway vehicle (1).

8. The railway vehicle brake control device (100) according to claim 7, **characterized in that**
when the cause is determined to be the external cause, the brake control unit (102) increases the target braking force.

9. The railway vehicle brake control device (100) according to claim 7 or 8, **characterized in that** the cause determination unit (106) determines that the cause is the external cause when there is an obstacle in front of the railway vehicle (1) in the direction of travel.

10. The railway vehicle brake control device (100) according to claim 9, **characterized in that**
when the distance between the railway vehicle (1) and the obstacle is smaller than a predetermined distance reference value, the brake control unit (102) increases the amount of increase in the target braking force per unit time to be more than that of a case where the distance is equal to or larger than the distance reference value.

11. The railway vehicle brake control device (100) according to any one of claims 1 through 10, **characterized by** comprising an abnormality determination unit (107) configured to determine whether or not the railway vehicle brake control device (100) is in an abnormal state.

12. The railway vehicle brake control device (100) according to claim 11, **characterized in that**
in a state where the emergency brake command has not been received, by supplying an excitation signal to an emergency solenoid valve (23) of the railway vehicle (1), the brake control unit (102) excites the emergency solenoid valve (23) so as to shut off the supply of a brake pressure that is based on a load compensation pressure from a variable load valve of the railway vehicle (1) to a brake cylinder (17) of the brake device (16) at the emergency solenoid valve (23), and
when the railway vehicle brake control device (100) is in an abnormal state, the brake control unit (102) demagnetizes the emergency solenoid valve (23) so as to supply the brake pressure that is based on the load compensation pressure to the brake cylinder (17) via the emergency solenoid valve without supplying the excitation signal to the emergency solenoid valve (23).

13. A railway vehicle brake device (10) **characterized by** comprising:
a railway vehicle brake control device (100) configured to include:
a sliding detection unit configured to detect sliding between wheels (12) of a railway vehicle (1) and a rail;
a receiving unit (101) configured to receive an emergency brake command for operating a brake device (16) in case of emergency that puts a brake on the railway vehicle (1) ;
a brake control unit (102) configured to use a predetermined braking force as a target braking force and controls the brake device (16) so as to generate the target braking force in response to the emergency brake command; and
a sliding determination unit (103) configured to determine whether or not sliding is occurring on wheels (12) of the railway vehicle (1) during the control of the brake device (16); and
the brake device (16), **characterized in that**
after generating the predetermined braking force in response to the emergency brake command, the brake control unit (102) sets the target braking force to be equal to or larger than the predetermined braking force and increases the target braking force until sliding is determined to be occurring.
